# EUROPEAN PATENT SPECIFICATION

(11) **EP 0 890 282 B1**
(45) Date of publication and mention of the grant of the patent: **15.01.2003**
(21) Application number: 97905235.4
(22) Date of filing: 20.02.1997
(51) Int. Cl.: H04Q 7/38

(54) **TELECOMMUNICATIONS SYSTEM**
TELEKOMMUNIKATIONSSYSTEM
SYSTEME DE TELECOMMUNICATIONS

(30) Priority: 29.03.1996 GB 9630223; 29.03.1996 GB 9606795
(43) Date of publication of application: 13.01.1999
(73) Proprietor: TELECOM SECURICOR CELLULAR RADIO LIMITED, Slough SL1 4DX, Berkshire (GB)
(72) Inventor: DOUSE, William, Alexander, Buckinghamshire SL9 9EN (GB); SANDERS, David, Gene, Plano, TX 75023 (US)
(74) Representative: Lidbetter, Timothy Guy Edwin
(86) International application number: GB9700489
(87) International publication number: WO97037506

(56) References cited:
- EP-A- 0 467 534
- WO-A-92/19078
- WO-A-97/07644
- DE-A- 4 317 143
- PROCEEDINGS OF THE GLOBAL TELECOMMUNICATIONS CONFERENCE (GLOBECOM), HOUSTON, NOV. 29 - DEC. 2, 1993, vol. 3 OF 4, 29 November 1993, INSTITUTE OF ELECTRICAL AND ELECTRONICS ENGINEERS, pages 1944-1949, XP000436146 SAWADA H ET AL: "INTER-NETWORK ROAMING BASED ON PERSONAL DIGITAL CELLULAR STANDARDS"

## Description

This invention relates to cellular telecommunications systems. It is concerned with accessing user data for the purpose of setting up a call or other service using the cellular telecommunications network.

It is necessary to identify individual mobile users in order to set up an outgoing call, routing incoming ones, and for ancillary purposes such as billing and location updates. In modern cellular telecommunications systems, such data is stored in a user-location register. This data is required to support mobility, and includes information such as the last reported location of the user's equipment. Other information, not specific to the cellular context, may identify whether a user is authorised to use the system, whether he is entitled to use certain special services or is barred from certain classes of call (e.g. international, premium services), whether, and to where, calls have been forwarded etc.

In a fixed system the system can normally identify the user simply by identifying the physical connections linking his telephone equipment to the rest of the network but by its very nature this is not possible in a mobile system. The user's equipment may turn up anywhere in the network and make and receive calls through whichever radio base station of the mobile network provides the strongest signal. Each mobile user is therefore provided with a subscriber identity, an encoded numerical or alphanumeric value which is transmitted to the network to identify the user when he establishes contact with the network.

In some cellular systems, including those designed according to the standard known as GSM (Global System for Mobile Communications), the subscriber identity is carried by a detachable module known as a SIM (Subscriber Identity Module) which allows the owner of the SIM to use any handset compatible with the module. This allows the user to readily change from one handset (for example low power hand-portable; voice capability only) to another (for example vehicle-mounted; voice, data and facsimile capability) and still be identified as the same user by the system. However, replacement of a lost SIM still requires a new subscriber identity as the subscriber identity typically is permanently programmed into the SIM during the manufacturing process.

It will be apparent that whether the subscriber identity is carried by the handset itself or by a detachable SIM, it actually identifies the user equipment (handset or SIM) to the system, rather than identifying the user himself. In the following, the term "user equipment" will be used to mean that component (handset or SIM) carrying the subscriber identity.

The subscriber identity is unknown to the general public (and indeed usually to the user himself). This is necessary in order to prevent fraudulent duplication of subscriber identifies. However, in order to make telephone calls to the mobile telephone, a publicly available identification must be available. Consequently, the mobile user also has a "directory number" for use by other users to set up calls to the mobile user. A user may have more than one directory number, assigned to the user for different services, for example voice, fax, data etc. The use of different numbers allows different call types to be recognised so that they can be handled differently.

The user therefore has two or more identities; the subscriber identity and the directory number or numbers. In the following discussion these will be collectively termed "user identities". There may be other identities, such as a handset identity or ESN (Electronic Security Number).

When a user acquires a new user equipment (handset or SIM) it is desirable for the user to be able to retain the same directory number so that callers wishing to contact the user can still use it. In some circumstances this can be arranged by reprogramming the user-location register so that the appropriate directory number now accesses the records of the new subscriber identity. However, as the number of users of mobile networks expands, the networks have to add additional registers. Moreover, each network operator has its own registers. It is necessary for the system to be able to identify on which register the records are located so that the necessary data can be retrieved. This is achieved by allocating specific groups of subscriber identities and directory numbers to each register. These groups are typically specified by a number range, or in the case of directory numbers, by a dialling code prefix. The switching within the network identifies the register to which the number relates, and directs signalling to the appropriate register.

The allocation of identities to registers can cause a problem if equipment requires replacement in the event of loss, damage, or a desire to upgrade, as it may not be possible to find user equipment of the type required by the user, having a subscriber identity allocated to the same register as the user's existing directory number. If such a subscriber identity cannot be allocated, a change in directory number will be necessary to correspond with the subscriber identity which is allocated. This can be inconvenient for the user, who must notify his new directory number to all people likely to wish to make calls to him.

Moreover, if the user acquires a new service, requiring a second directory number, subsequent to acquiring his initial subscription, it is necessary to pair both directory numbers with the same subscriber identity. If the register to which the existing directory number relates has no spare numbers, the user must be reassigned to another register, necessitating allocation of two new directory numbers and loss of the original one.

In some systems, usually those systems in which the equipment bearing the subscriber identity is of relatively high value, reprogramming of the subscriber identity by authorised personnel is permitted. This allows new or second-hand user equipment to be programmed with its new owner's existing subscriber identity, allowing the current directory number to be retained. However, such a facility is open to abuse.

In those systems using SIMs, reprogramming of a handset with a new identity is achieved simply by exchanging the SIM. SIMs themselves have little intrinsic value and are relatively cheap to replace should they be lost or stolen. SIMs are manufactured with a permanent 'burnt-in' subscriber identity to prevent unauthorised reprogramming. Consequently, changes in use which necessitate a new SIM result in a new subscriber identity and hence a new directory number.

Call diversion (number translation) can be used to re-route calls from the subscriber's existing directory number to the new directory number, but directory numbers are a scarce resource and the allocation of an additional directory number, without release of the first, is an inefficient use of this resource. Even if call diversion is not used, it is undesirable to re-use previously-allocated directory numbers until some time after the first user ceases to use it.

It is therefore desirable to allow the user identities of the second type (directory numbers) to be readily transferable between equipments, to allow them to remain with the same user, whilst making user identities of the first type (subscriber identities) permanent with respect to the equipment with which the user identity is associated (the SIM in a SIM-based system).

In some systems the associations within a user-location register between the two identities (subscriber identity and directory number) are selectable, European patent specification number EP0467534 (Vodafone) discloses a system in which these associations are stored in an 'analysis table', which is distributed over the network. The analysis table allows the correct location within the user-location register to be identified. WO94/28686 (DeTeCon) discloses a system in which two or more handset identities may be associated with the same directory number, allowing a user to be contactable on the same directory number whichever of several handsets he is currently using.

However, it is only possible, with existing systems, to use the same directory number with different subscriber identities, if the SIMs (or other user equipments) all have subscriber identity addresses associated with the same user-location register. If the second user equipment has a subscriber identity address associated with a user-location register other than that of the existing subscriber identity, a new directory number associated with the new user-location register must be allocated so that data associated with the user can still be retrieved using either user identity.

Reference is also made to earlier European Patent Application 96925933.2 (EP0846402), which was published (as WO97/07644) after the filing date of the present application, because of which an alternative set of claims is filed for certain contracting states.

The invention provides, in its three aspects, a user-location system for a cellular telecommunications system, a method of translating user identities in a cellular telecommunications system, and a method of operating a user-location system for a cellular telecommunications system, according to the attached claims.

This arrangement allows one or more second user identities, such as a directory number, to be freely allocated to a user without being restricted to a group of such second user identities nor to any particular group of first user identities. For example the user's first user identity may be associated with an item of user equipment, such as a mobile telephone handset or SIM. In an alternative arrangement the user equipment identity is the, or another, second user identity, the first user identity being another identifier such as an account number which is independent of both the directory number and the identity associated with the equipment.

The arrangement allows the existing network architecture to be retained unmodified, other than the addition of the translation register. In particular, the existing user-location register can be used. All data access will be made to it using the first user identity, incoming calls using the second user identity (the directory number) being translated to the first user identity as an initial step.

In one embodiment the first and second user identities serve as routing keys for identifying in which of the plurality of user-location registers the relevant user record is held, and also serve as access keys for identifying the individual record within the respective user-location register, wherein user identities of the second type are converted to routing keys of the first type and access keys of the second type.

Preferred embodiments of the invention will now be described by way of example, with reference to the drawings, in which:-
Figure 1 illustrates the elements of a cellular radio system necessary to the understanding of this invention.
Figure 2 illustrates the Home Location Register of a mobile radio system, according to a first embodiment the invention.
Figure 3 illustrates a translation register according to embodiments of the invention.
Figure 4 illustrates a modified Home Location Register according to one embodiment of the invention.

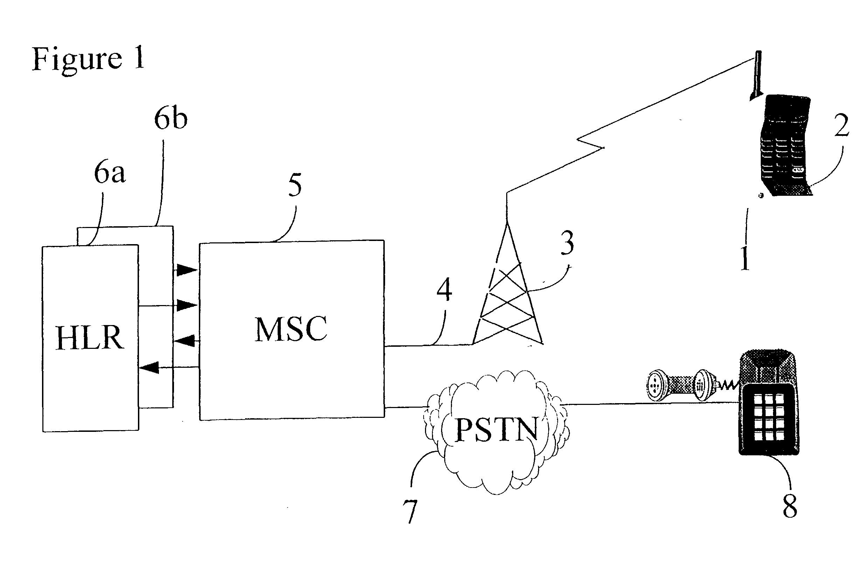

Figure 1 shows a mobile radio handset (1), which in this illustrative embodiment has a subscriber identity module (SIM) 2, and is in radio communication with a radio base station 3 which is in turn connected by a fixed link 4, to a mobile switching centre (MSC) 5. The mobile switching centre 5 is connected to home location registers (HLR) 6a, 6b and to other telephone users 8, either directly, or through other mobile switching centres (not shown) and/or telephone networks such as a PSTN (Public Switched Telephone Network) 7 .

For simplicity only one base station 3 is shown, but in practice there would be many base stations, and the mobile unit 1 can operate by way of radio links to whichever one of them currently provides the best radio link.

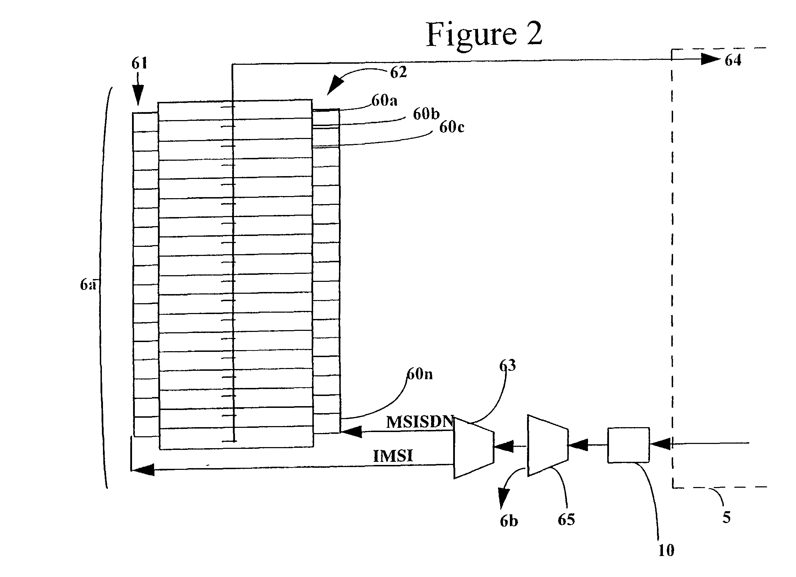

Figure 2 shows a conventional layout for a Home Location Register 6a and ancillary selectors 63, 65, with the addition of a translation unit 10 according to the invention. The Home Location Register 6a comprises a data store which comprises a series of individual data addresses 60a, 60b.....60n, each one of which stores data relating to an individual item of user equipment, such as the SIM 2. Data is obtained from the Home Location Register 6a by messages transmitted from the Mobile Switching Centre 5 which include an access key. The access key comprises a user identity which identifies the address from which data is to be obtained. Each data address in the Home Location Register 6a is addressable by two or more different access keys: a first user identity (input 61) and one or more second user identities (input 62). The first user identity is a subscriber identity, specific to an item of user equipment. Each second user identity is a directory number. A selector 63 reads the access key and identifies whether it is a user identity of the first type or of the second type, and routes it to the appropriate input 61, 62. The data so retrieved is returned to the Mobile Switching Centre 5 by an output 64.

The message from the Mobile Switching Centre also includes a routing key, which identifies the HLR from which data 5 to be obtained. This routing key is used by a selector 65 to route the request to the correct HLR 6a or 6b (not shown in detail). Conventionally the routing key and the access key are the same, and thus the routing key, like the access key, may be a user identity of either the first type or the second type .

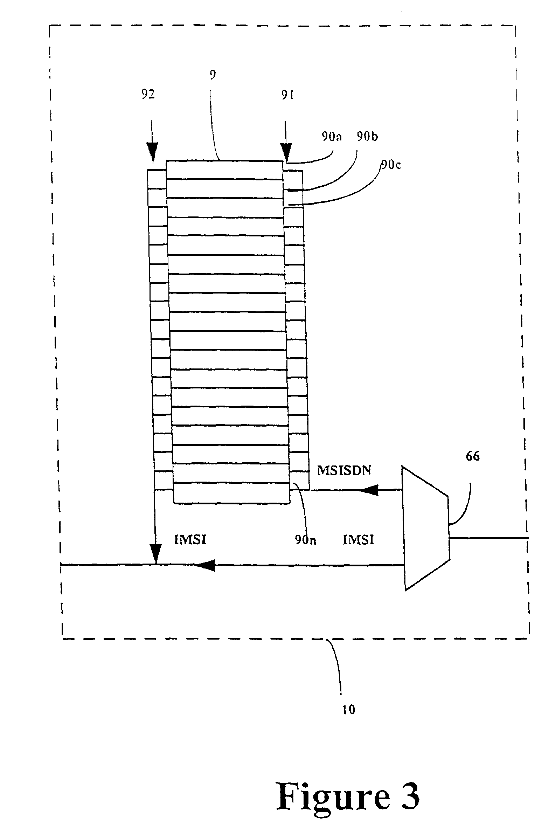

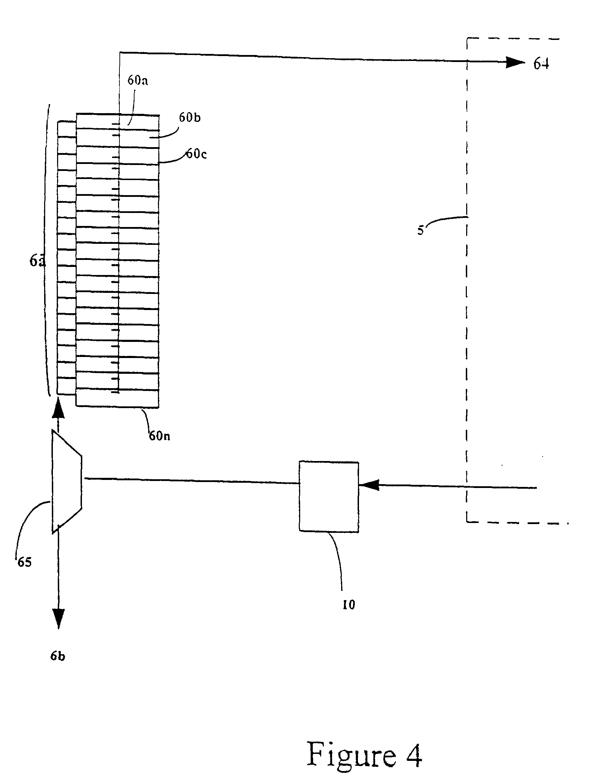

In a first embodiment of the invention, this conventional arrangement is modified by the addition of a translation unit 10, which is illustrated in Figure 3. According to one embodiment of the invention, such a translation unit can be interposed in the otherwise conventional arrangement of Figure 2 as indicated therein. In an alternative arrangement, (Figure 4), other modifications from the prior art arrangement are also made, as will be discussed later.

In the translation unit 10 a selector 66 identifies whether the routing key is of the first type or the second type. Those of the first type are routed directly to the selector 65. Routing keys of the second type (directory numbers), are routed by the selector 66 to an input 91 of the translation register 9. The translation register 9 has a number of addresses 90a, 90b, 90c.....90n each of which stores, as an item of data, a user identity of the first type (subscriber identity) which can be supplied from an output 92 to the inputs 61 of the appropriate register 6a, 6b.

It should be noted that in the arrangement of Figure 2 only the routing keys are modified, to allow signals from the MSC to reach the correct HLR 6a, 6b. The access keys, which are used to access the correct address within the HLR, are unchanged. This configuration is useful for certain types of HLR which are configured such that they require certain instructions to include access codes of the second type (directory numbers). It is necessary in this case for the HLRs 6a, 6b etc to be able to have any directory number as an access code, and not be limited to a specific number range. This is possible, because the routing code directory numbers are translated to IMSIs by the translation unit 10 before the destination HLR is selected.

Figure 4 shows a modified arrangement according to the invention. In this Figure the HLR 6a may be identical to the HLR 6a shown in Figure 2. However, in this modified arrangement the second user identity inputs 62 are not used to access the addresses in the HLR 6a and need not be provided. (They are omitted in the drawing). The second user identity may nevertheless still be stored and retrievable.

In this arrangement the translation register is arranged to convert both the routing key and the access key, should they be a user identity of the second type, to user identities of the first type. This allows the two keys to remain the same, and avoids the need for HLRs to be reprogrammed with new directory numbers, which may well not be from the original number range. However, it does require that all instructions to the HLR are addressable using user identities of the first type (subscriber identities).

The operation of these modified arrangements will now be described. The user identities used in mobile communications will first be discussed. The subscriber identities have to be unique, not duplicated even between different operators, so that if an equipment (handset or SIM) is used in range of a network other than the user's 'home network' it is identified as a 'foreign' equipment and either disregarded, or handled under a roaming agreement by the host network, where such arrangements exist. This subscriber identity has to be more complex than the directory number by which calls are made to the user by other parties. The subscriber identities used in SIMs in the GSM standard are known as IMSI (International Mobile Subscriber Identity) and have fifteen digits, taking the form 234 10 9876543210. These identify the card as follows:-
- 234:: mobile country code, in this case the United Kingdom
- 10:: mobile network code, in this case the UK operator Cellnet.

The remaining ten digits identify the individual user.

A user also has allocated one or more directory numbers by which other telephone users 8 can call the mobile user. The directory number may take the form 44 802 000123, where the first five digits identify the user's network and the other six identify the individual terminal. Such directory numbers are generally referred to as MSISDN (Mobile Systems Integrated Services Digital Network) numbers.

The PSTN 7 may include number translation facilities, so that calls to a first directory number can be diverted to another, under the control of the user. In such cases, the directory number output by the MSC 5 to the HLR 6a will not be that originally dialled by the user 8.

The MSISDN generally differs slightly from that actually dialled by someone making a telephone call to the user. For example, an international access code (00 in most countries) may be required or, if making a call from a telephone to which the same international dialling code applies, the international dialling code (44 in this example) is generally replaced by a trunk access code, usually "O". The resulting shorter version, with the international code replaced by the trunk access code, (viz. 0802 000123) would be unique within a given country but may be duplicated in other countries.

It is unnecessary for the human user, or anyone making a call to him, to know the subscriber identity (IMSI). All operations by the human user are carried out using the directory (MSISDN) number. The IMSI is simply the code by which the network recognises the user's equipment.

When a mobile unit 1 initiates a function, such as making a call attempt or performing a position update, it first identifies itself to the system, by transmitting its subscriber identity (IMSI) to the mobile switching centre 5.

The mobile switching centre 5 uses the IMSI as a routing key to recognise to which HLR 6a, 6b a request for data should be sent to. For example any IMSI whose first eight digits are 234 10 123..... may relate to a user identity stored on a first HLR 6a, whilst an IMSI with a different code relates to a different HLR 6b, which may be a second HLR of the same operator, or an HLR belonging to a different operator altogether.

The data is accessed from the HLR 6a, 6b using a first address input 61. The data stored in the addresses 60a, 60b.....60n include data such as the user's access rights (which may determine whether the user is permitted to operate though the MSC requesting the data) and the types of service he is permitted to use. It also includes temporary data such as the current location of the user. This data may be changed when the user performs a location update, if the update arrives from a different base station from the one to which he is currently recorded as working.

The data stored in the address 60a, 60b.....60n corresponding to the IMSI of the mobile unit is returned to the MSC 5 through an output 64.

An incoming call may of course be made from a fixed telephone 8 through the public switched telephone network (PSTN) 7, or from another mobile unit, (not shown) connected to the same mobile switching centre 5, or a different one which may itself be connected to the Mobile Switching Centre 5 either directly or through the PSTN 7.

The mobile system must allow the user data to be accessed using either user identity. In the arrangement of Figure 2 the Home Location Register 6a, has a second data address input 62. The data returned to the MSC 5 though the output 64 should relate to the same user whether the address 60a.....60n is accessed using the first data address input 61 or the second data address input 62.

As described above for the subscriber identity, some instructions from the MSC 5 to the HLR use the directory number as a routing key to identify to which HLR 6a, 6b the data request is to be sent. This is done in existing systems by allocating a particular directory number range to a particular HLR, for example all "0802" numbers may be allocated to one HLR 6a and all "0860" numbers to another HLR 6b.

In the modified arrangement according to the invention, shown in Figure 3, the selector 66 directs user identities of the first type (IMSI) to the Home Location Registers 6a, 6b by way of the selector 65 as before. However, user identities of the second type (directory numbers; MSISDN) are first routed by the selector 66 to a translation register 9. The translation register has a plurality of register addresses 90a, 90b.....90n, each addressable by a directory number. The data stored in these addresses is the corresponding first user identity (IMSI) which is returned to the selector for routing to the appropriate register 6a, 6b.

Some HLR systems are configured such that certain functions operate in response to an MSISDN access key. In a first embodiment, the translation register 9 only modifies the routing key. The access key, which identifies the individual address within the HLR, remains unchanged. The MSISDN routing key is changed to an IMSI, so that the correct HLR is reached, but the MSISDN is still used to access the correct address within that HLR.

It will be noted that in the arrangement of Figure 2 the Home Location Register 6a, is unchanged from the prior art arrangement. This allows the invention to be implemented simply by installing the translation unit 10, without having to replace the existing Home Location Registers 6a, 6b etc. The second data address information may still be used as the access key to retrieve information once the correct Home Location Register has been identified using the first user identity.

In an alternative arrangement, shown in Figure 4, both the routing key and access key are modified by the translation register 9. In this embodiment only IMSIs are used to access data from the HLRs 6a, 6b; the inputs 62 are redundant and can therefore be omitted, as shown in Figure 4.

The operation of both embodiments is similar, and will now be described.

Should a user require a new equipment, with a new subscriber identity (IMSI) e.g. a new SIM 2, the translation register 9 can be reprogrammed such that the IMSI recorded as corresponding to the user's existing directory number is changed to become the new IMSI. The new and old IMSIs may relate to different registers 6a, 6b, but can both be accessed from the same translation register 9, because any IMSI may be entered in the addresses 90a, 90b etc.

The translation register allows the network to treat the user with a new SIM or handset as a user completely distinct from the same user with the old SIM or handset. People attempting to make calls to the user notice no change, because no change is made to the directory number. This allows complete flexibility in correspondence of directory numbers and subscriber identities, allowing a user to retain the same directory number however often he changes subscriber identity (IMSI).

If a second subscriber identity (MSISDN) is required for an existing equipment (SIM 2), for example for the provision of an additional service, the translation register 9 is programmed so that the new MSISDN is recorded as corresponding to the existing IMSI. As described above, if the MSISDN is used within the HLR as an access key, (the IMSI only being used for routing the correct HLR) the new MSISDN must also be programmed into the HLR.

By separating the register 9 addressable by the MSISDN from those addressable by the IMSI (6a, 6b, etc.), the need for concordances to be restricted to certain number groups is removed. In the translation register 9 the IMSIs are the data, not the addresses. Only the MSISDNs, and not the IMSIs, are ever used to access data from the register 9, and so there are no restrictions on what IMSIs can be entered on the register 9.

The programming of the translation register is within the system operator's control, so it is secure against unauthorised activity. In any case, unauthorised changes would only misdirect incoming calls: the user would still have a unique SIM and associated IMSI, which identify the account to which outgoing calls are billed.

The invention has been described with particular reference to a SIM-based configuration. However, it will be apparent that the invention is equally applicable to systems in which the user identity is carried by the handset rather than by a detachable SIM. Handsets for use with such a system could be made with 'burnt-in' subscriber identities, as is already done for SIMs, thereby reducing the potential for fraud. A second-hand handset would retain its original subscriber identity (IMSI), but this can be associated in the register 9 with its new owner's new or existing directory number (MSISDN). If the previous owner buys a new handset he will himself be allocated a new subscriber identity (IMSI) , which will be associated in the register 9 with his existing directory number (MSISDN).

In the foregoing a system has been described in which the translation register translates the MSISDN (Directory Number) to the IMSI (universally recognised subscriber identity). Alternatively the Home Location Register may be internally organised using a third identifier, referred to hereinafter as a 'customer number'. In this case a translation register or registers would be arranged to convert both IMSI codes and MSISDN codes into the customer numbers. A customer could have several SIMs, each with its own IMSI, associated with a single customer profile. This would enable a customer with two or more telephones or SIMs to be assigned two or more directory numbers without restrictions to the associated IMSI or MSISDNs. It would also allow an account to be shared by several users, e.g. a family or a business.

## Claims (Claims for the following Contracting State(s): BE, CH, DK, ES, IE, IT, LI, NL, PT)

1. A user-location system for a cellular telecommunications system, comprising a plurality of user-location registers (6a, 6b)for storing data relating to the locations of users in the cellular radio network, each user-location register comprising a plurality of user records (60a, 60b, 60c), each user record comprising data relating to an associated user, each user record being accessible by means of a first user identity and one or more corresponding second user identities, each first user identity being selected from a group of user identities allocated to the respective user-location register (6a, 6b), **characterised in that** there is at least one translation register (10) accessible using an allocated group of second user identities and arranged such that, on input of a second user identity to the translation register (10), the corresponding first user identity is output from the translation register (10) for transmission to the user-location register (6a,6b) to which that first user identity is allocated.

2. A system according to claim 1, wherein the first user identities are associated with items of user equipment (2).

3. A system according to claim 1, wherein at least some of the second user identities are associated with items of user equipment (2).

4. A system according to claim 1, 2 or 3, wherein at least some of the second user identities are directory numbers.

5. A system according to any of claims 1 to 4, wherein the first and second user identities serve as routing keys for identifying which of the plurality of user-location registers (6a, 6b) holds the relevant user record, and also serve as access keys for identifying the individual user record (60a, 60b, 60c) within the respective user-location register (6a, 6b), and the translation register (10) is arranged to operate on user identities of the second type to produce routing keys of the first type and access keys of the second type.

6. A system according to any preceding claim, wherein more than one second user identity may be associated with a given first user identity.

7. A method of translating user identities in a cellular telecommunications system comprising the steps of associating user data with respective first user identities in a user-location register (6a), whereby data in the user-location register (6a) associated with a first user identity can be accessed using a corresponding second user identity, **characterised in that** the second user identities are applied to a translation register (10) to provide corresponding first user identities for application to the user-location register (6a).

8. A method according to claim 7, wherein more than one second user identity may be associated with a given first user identity.

9. A method of operating a user-location system for a cellular telecommunications system comprising a plurality of user-location registers (6a, 6b), each user-location register (6a, 6b) comprising a plurality of user records (60a, 60b, 60c), each user record comprising data relating to an associated user and being accessible by means of a first user identity and one or more second user identities, each first user identity being selected from a group of user identities allocated to the respective user-location register (6a, 6b), the method being **characterised in that** on input of a second user identity to the system, the first user identity corresponding to the second user identity is identified and used to select the user-location register (6a, 6b) at which the user record (60a, 60b, 60c) corresponding to the second user identity is stored.

10. A method according to claim 7, 8 or 9, wherein the first user identities are associated with items of user equipment (2).

11. A method according to claim 7, 8 or 9, wherein at least some of the second user identities are associated with items of user equipment (2)

12. A method according to claim 7, 8, 9, 10 or 11, wherein at least some of the second user identities are directory numbers.

13. A method according to claim 7, 8, 9, 10, 11 or 12, wherein the first and second user identities serve as routing keys for identifying which of the plurality of user-location registers (6a, 6b) holds the relevant user record (60a, 60b, 60c), and also serve as access keys for identifying the individual record (60a, 60b, 60c) within the respective user-location register (6a, 6b), wherein user identities of the second type are converted to routing keys of the first type and access keys of the second type.

## Claims (Claims for the following Contracting State(s): DE, FI, FR, GB, SE)

1. A user-location system for a cellular telecommunications system, comprising a plurality of user-location registers (6a, 6b) for storing data relating to the locations of users in the cellular radio network, each user-location register comprising a plurality of user records (60a, 60b, 60c), each user record comprising data relating to an associated user, each user record being accessible by means of a first user identity and one or more corresponding second user identities, each first user identity being selected from a group of user identities allocated to the respective user-location register (6a, 6b), further comprising at least one translation register (10) accessible only using an allocated group of second user identities and arranged such that, on input of a second user identity to the translation register (10), the corresponding first user identity is output from the translation register (10) for transmission to the user-location register (6a,6b) to which that first user identity is allocated.

2. A system according to claim 1, wherein the first user identities are associated with items of user equipment (2).

3. A system according to claim 1, wherein at least some of the second user identities are associated with items of user equipment (2).

4. A system according to claim 1, 2 or 3, wherein at least some of the second user identities are directory numbers.

5. A system according to any of claims 1 to 4, wherein the first and second user identities serve as routing keys for identifying which of the plurality of user-location registers (6a, 6b) holds the relevant user record, and also serve as access keys for identifying the individual user record (60a, 60b, 60c) within the respective user-location register (6a, 6b), and the translation register (10) is arranged to operate on user identities of the second type to produce routing keys of the first type and access keys of the second type.

6. A system according to any preceding claim, wherein more than one second user identity may be associated with a given first user identity.

7. A method of translating user identities in a cellular telecommunications system comprising the steps of associating user data with respective first user identities in a user-location register (6a), whereby data in the user-location register (6a) associated with a first user identity can be accessed using a corresponding second user identity, the second user identities being applied to a translation register (10) to provide corresponding first user identities for application to the user-location register (6a), the translation register (10) being accessible only using an allocated group of second user identities.

8. A method according to claim 7, wherein more than one second user identity may be associated with a given first user identity.

9. A method of operating a user-location system for a cellular telecommunications system comprising a plurality of user-location registers (6a, 6b), each user-location register (6a, 6b) comprising a plurality of user records (60a, 60b, 60c), each user record comprising data relating to an associated user and being accessible by means of a first user identity and one or more second user identities, each first user identity being selected from a group of user identities allocated to the respective user-location register (6a, 6b), in which when a second user identity is input to the system, the first user identity corresponding to the second user identity is identified from a translation register (10) and the first user identity is used to select the user-location register (6a, 6b) at which the user record (60a, 60b, 60c) corresponding to the second user identity is stored, the translation register (10) being accessible only using an allocated group of second user identities .

10. A method according to claim 7, 8 or 9, wherein the first user identities are associated with items of user equipment (2).

11. A method according to claim 7, 8 or 9, wherein at least some of the second user identities are associated with items of user equipment (2)

12. A method according to claim 7, 8, 9, 10 or 11, wherein at least some of the second user identities are directory numbers.

13. A method according to claim 7, 8, 9, 10, 11 or 12, wherein the first and second user identities serve as routing keys for identifying which of the plurality of user-location registers (6a, 6b) holds the relevant user record (60a, 60b, 60c), and also serve as access keys for identifying the individual record (60a, 60b, 60c) within the respective user-location register (6a, 6b), wherein user identities of the second type are converted to routing keys of the first type and access keys of the second type.

## Patentansprüche (Patentansprüche für folgende(n) Vertragsstaat(en): BE, CH, DK, ES, IE, IT, LI, NL, PT)

1. Anwenderortssystem für ein Zellentelekommunikationssystem, mit mehreren Anwenderortsregistern (6a, 6b) zum Speichern von auf die Orte eines Anwenders in dem Zellenfunknetz bezogenen Daten, wobei jedes Anwenderortsregister mehrere Anwenderdatensätze (60a, 60b, 60c) enthält, wobei jeder Datensatz auf einen zugeordneten Anwender bezogene Daten enthält und wobei auf jeden Datensatz mittels einer ersten Anwenderkennung und einer oder mehrerer entsprechender zweiter Anwenderkennungen zugegriffen werden kann, wobei jede erste Anwenderkennung aus einer Gruppe von Anwenderkennungen, die dem jeweiligen Anwenderortsregister (6a, 6b) zugewiesen sind, ausgewählt wird, ferner mit wenigstens einem Übersetzungsregister (10), auf das nur unter Verwendung einer zugewiesenen Gruppe zweiter Anwenderkennungen zugegriffen werden kann und das so beschaffen ist, daß bei Eingabe einer zweiten Anwenderkennung in das Übersetzungsregister (10) die entsprechende erste Anwenderkennung vom Übersetzungsregister (10) ausgegeben wird, um an das erste Anwenderortsregister (6a, 6b), dem die erste Anwenderkennung zugewiesen ist, übertragen zu werden.

2. System nach Anspruch 1, bei dem die ersten Anwenderkennungen Teilen eines Anwendergeräts (2) zugeordnet sind.

3. System nach Anspruch 1, bei dem wenigstens einige der zweiten Anwenderkennungen Teilen eines Anwendergeräts (2) zugeordnet sind.

4. System nach Anspruch 1, 2 oder 3, bei dem wenigstens einige der zweiten Anwenderkennungen Teilnehmernummern sind.

5. System nach einem der Ansprüche 1 bis 4, bei dem die ersten und zweiten Anwenderkennungen als Weiterleitungsschlüssel dienen, um jene der mehreren Anwenderortsregister (6a, 6b) zu identifizieren, die den relevanten Anwenderdatensatz halten, und außerdem als Zugriffsschlüssel dienen, um den einzelnen Anwenderdatensatz (60a, 60b, 60c) in dem entsprechenden Anwenderortsregister (6a, 6b) zu identifizieren, und bei dem das Übersetzungsregister (10) so beschaffen ist, daß es Anwenderkennungen des zweiten Typs bearbeitet, um Weiterleitungsschlüssel des ersten Typs und Zugriffsschlüssel des zweiten Typs zu erzeugen.

6. System nach einem vorhergehenden Anspruch, bei dem einer gegebenen ersten Anwenderkennung mehr als eine zweite Anwenderkennung zugeordnet sein können.

7. Verfahren zum Übersetzen von Anwenderkennungen in einem Zellentelekommunikationssystem, das die folgenden Schritte umfaßt: Zuordnen von Anwenderdaten zu entsprechenden ersten Anwenderkennungen in einem Anwenderortsregister (6a), wobei auf Daten in dem Anwenderortsregister (6a), die einer ersten Anwenderkennung zugewiesen sind, unter Verwendung einer entsprechenden zweiten Anwenderkennung zugegriffen werden kann, **dadurch gekennzeichnet, daß** die zweiten Anwenderkennungen in ein Übersetzungsregister (10) eingegeben werden, um entsprechende erste Anwenderkennungen zu schaffen, die in das Anwenderortsregister (6a) eingegeben werden können.

8. Verfahren nach Anspruch 7, bei dem einer gegebenen ersten Anwenderkennung mehr als eine zweite Anwenderkennung zugewiesen werden können.

9. Verfahren zum Betreiben eines Anwenderortssystems für ein Zellentelekommunikationssystem, das mehrere Anwenderortsregister (6a, 6b) umfaßt, wovon jedes mehrere Anwenderdatensätze (60a, 60b, 60c) enthält, wobei jeder Anwenderdatensatz auf einen zugeordneten Anwender bezogene Daten umfaßt und wobei auf jeden Anwenderdatensatz mittels einer ersten Anwenderkennung und einer oder mehrerer zweiter Anwenderkennungen zugegriffen werden kann, wobei jede erste Anwenderkennung aus einer Gruppe von Anwenderkennungen ausgewählt wird, die dem jeweiligen Anwenderortsregister (6a, 6b) zugewiesen ist, wobei das Verfahren **dadurch gekennzeichnet ist, daß** dann, wenn in das System eine zweite Anwenderkennung eingegeben wird, die der zweiten Anwenderkennung entsprechende erste Anwenderkennung identifiziert und dazu verwendet wird, das Anwenderortsregister (6a, 6b), in dem der der zweiten Anwenderkennung entsprechende Anwenderdatensatz (60a, 60b, 60c) gespeichert ist, auszuwählen.

10. Verfahren nach Anspruch 7, 8 oder 9, bei dem die ersten Anwenderkennungen Teilen eines Anwendergeräts (2) zugeordnet sind.

11. Verfahren nach Anspruch 7, 8 oder 9, bei dem wenigstens einige der zweiten Anwenderidentitäten Teilen des Anwendergeräts (2) zugewiesen sind.

12. Verfahren nach Anspruch 7, 8, 9, 10 oder 11, bei dem wenigstens einige der zweiten Anwenderidentitäten Teilnehmerrufnummern sind.

13. Verfahren nach Anspruch 7, 8, 9, 10, 11 oder 12, bei dem die ersten und zweiten Anwenderkennungen als Weiterleitungsschlüssel dienen, die jene der mehreren Anwenderortsregister (6a, 6b) identifizieren, die den relevanten Anwenderdatensatz (60a, 60b, 60c) halten, und außerdem als Zugriffsschlüssel dienen, die den einzelnen Datensatz (60a, 60b, 60c) in dem entsprechenden Anwenderortsregister (6a, 6b) identifizieren, wobei Anwenderidentitäten des zweiten Typs im Weiterleitungsschlüssel des ersten Typs und Zugriffsschlüssel des zweiten Typs umgesetzt werden.

## Patentansprüche (Patentansprüche für folgende(n) Vertragsstaat(en): DE, FR, FI, GB, SE)

1. Anwenderortssystem für ein Zellentelekommunikationssystem, mit mehreren Anwenderortsregistern (6a, 6b) zum Speichern von auf die Orte eines Anwenders in dem Zellenfunknetz bezogenen Daten, wobei jedes Anwenderortsregister mehrere Anwenderdatensätze (60a, 60b, 60c) enthält, wobei jeder Datensatz auf einen zugeordneten Anwender bezogene Daten enthält und wobei auf jeden Datensatz mittels einer ersten Anwenderkennung und einer oder mehrerer entsprechender zweiter Anwenderkennungen zugegriffen werden kann, wobei jede erste Anwenderkennung aus einer Gruppe von Anwenderkennungen, die dem jeweiligen Anwenderortsregister (6a, 6b) zugewiesen sind, ausgewählt wird, ferner mit wenigstens einem Übersetzungsregister (10), auf das nur unter Verwendung einer zugewiesenen Gruppe zweiter Anwenderkennungen zugegriffen werden kann und das so beschaffen ist, daß bei Eingabe einer zweiten Anwenderkennung in das Übersetzungsregister (10) die entsprechende erste Anwenderkennung vom Übersetzungsregister (10) ausgegeben wird, um an das erste Anwenderortsregister (6a, 6b), dem die erste Anwenderkennung zugewiesen ist, übertragen zu werden.

2. System nach Anspruch 1, bei dem die ersten Anwenderkennungen Teilen eines Anwendergeräts (2) zugeordnet sind.

3. System nach Anspruch 1, bei dem wenigstens einige der zweiten Anwenderkennungen Teilen eines Anwendergeräts (2) zugeordnet sind.

4. System nach Anspruch 1, 2 oder 3, bei dem wenigstens einige der zweiten Anwenderkennungen Teilnehmernummern sind.

5. System nach einem der Ansprüche 1 bis 4, bei dem die ersten und zweiten Anwenderkennungen als Weiterleitungsschlüssel dienen, um jene der mehreren Anwenderortsregister (6a, 6b) zu identifizieren, die den relevanten Anwenderdatensatz halten, und außerdem als Zugriffsschlüssel dienen, um den einzelnen Anwenderdatensatz (60a, 60b, 60c) in dem entsprechenden Anwenderortsregister (6a, 6b) zu identifizieren, und bei dem das Übersetzungsregister (10) so beschaffen ist, daß es Anwenderkennungen des zweiten Typs bearbeitet, um Weiterleitungsschlüssel des ersten Typs und Zugriffsschlüssel des zweiten Typs zu erzeugen.

6. System nach einem vorhergehenden Anspruch, bei dem einer gegebenen ersten Anwenderkennung mehr als eine zweite Anwenderkennung zugeordnet sein können.

7. Verfahren zum Übersetzen von Anwenderkennungen in einem Zellentelekommunikationssystem, das die folgenden Schritte umfaßt: Zuordnen von Anwenderdaten zu entsprechenden ersten Anwenderkennungen in einem Anwenderortsregister (6a), wobei auf Daten in dem Anwenderortsregister (6a), die einer ersten Anwenderkennung zugewiesen sind, unter Verwendung einer entsprechenden zweiten Anwenderkennung zugegriffen werden kann, wobei die zweiten Anwenderkennungen in ein Übersetzungsregister (10) eingegeben werden, um entsprechende erste Anwenderkennungen zu schaffen, die in das Anwenderortsregister (6a) eingegeben werden können, wobei auf das Übersetzungsregister (10) nur unter Verwendung einer zugewiesenen Gruppe zweiter Anwenderkennungen zugegriffen werden kann.

8. Verfahren nach Anspruch 7, bei dem einer gegebenen ersten Anwenderkennung mehr als eine zweite Anwenderkennung zugewiesen werden können.

9. Verfahren zum Betreiben eines Anwenderortssystems für ein Zellentelekommunikationssystem, das mehrere Anwenderortsregister (6a, 6b) umfaßt, wovon jedes mehrere Anwenderdatensätze (60a, 60b, 60c) enthält, wobei jeder Anwenderdatensatz auf einen zugeordneten Anwender bezogene Daten umfaßt und wobei auf jeden Anwenderdatensatz mittels einer ersten Anwenderkennung und einer oder mehrerer zweiter Anwenderkennungen zugegriffen werden kann, wobei jede erste Anwenderkennung aus einer Gruppe von Anwenderkennungen ausgewählt wird, die dem jeweiligen Anwenderortsregister (6a, 6b) zugewiesen ist, wobei dann, wenn in das System eine zweite Anwenderkennung eingegeben wird, die der zweiten Anwenderkennung entsprechende erste Anwenderkennung anhand eines Übersetzungsregisters (10) identifiziert wird und die erste Anwenderkennung dazu verwendet wird, das Anwenderortsregister (6a, 6b), in dem der der zweiten Anwenderkennung entsprechende Anwenderdatensatz (60a, 60b, 60c) gespeichert ist, auszuwählen, wobei auf das Übersetzungsregister (10) nur unter Verwendung einer zugewiesenen Gruppe zweiter Anwenderkennungen zugegriffen werden kann.

10. Verfahren nach Anspruch 7, 8 oder 9, bei dem die ersten Anwenderkennungen Teilen eines Anwendergeräts (2) zugeordnet sind.

11. Verfahren nach Anspruch 7, 8 oder 9, bei dem wenigstens einige der zweiten Anwenderidentitäten Teilen des Anwendergeräts (2) zugewiesen sind.

12. Verfahren nach Anspruch 7, 8, 9, 10 oder 11, bei dem wenigstens einige der zweiten Anwenderidentitäten Teilnehmerrufnummern sind.

13. Verfahren nach Anspruch 7, 8, 9, 10, 11 oder 12, bei dem die ersten und zweiten Anwenderkennungen als Weiterleitungsschlüssel dienen, die jene der mehreren Anwenderortsregister (6a, 6b) identifizieren, die den relevanten Anwenderdatensatz (60a, 60b, 60c) halten, und außerdem als Zugriffsschlüssel dienen, die den einzelnen Datensatz (60a, 60b, 60c) in dem entsprechenden Anwenderortsregister (6a, 6b) identifizieren, wobei Anwenderidentitäten des zweiten Typs im Weiterleitungsschlüssel des ersten Typs und Zugriffsschlüssel des zweiten Typs umgesetzt werden.

## Revendications (Revendications pour l'(les) Etat(s) contractant(s) suivant(s): BE, CH, DK, ES, IE, IT, LI, NL, PT)

1. Système de localisation d'utilisateurs pour un système de télécommunication cellulaire, comprenant une pluralité de registres de localisation d'utilisateurs (6a, 6b) pour stocker des données concernant les positions des utilisateurs dans le réseau radio cellulaire, chaque registre de localisation d'utilisateurs comprenant une pluralité d'enregistrements d'utilisateurs (60a, 60b, 60c), chaque enregistrement d'utilisateur comprenant des données concernant un utilisateur associé, chaque registre d'utilisateur étant accessible au moyen d'une première identité d'utilisateur et une ou plusieurs secondes identités correspondantes d'utilisateur, chaque première identité d'utilisateur étant choisie dans un groupe d'identités d'utilisateurs alloué au registre de localisation d'utilisateurs respectif (6a, 6b), **caractérisé par le fait qu'**il y a en outre au moins un registre de traduction (10) accessible par utilisation d'un groupe alloué de secondes identités d'utilisateur et agencé de façon que, en cas d'application d'une seconde identité d'utilisateur en entrée du registre de traduction (10), la première identité d'utilisateur correspondante sort du registre de traduction (10) pour être transmise au registre de localisation d'utilisateurs (6a, 6b) auquel est allouée cette première identité d'utilisateur.

2. Système selon la revendication 1, dans lequel les premières identités d'utilisateur sont associées à des éléments d'équipement d'utilisateur (2).

3. Système selon la revendication 1, dans lequel au moins certaines des secondes identités d'utilisateurs sont associées à des éléments d'équipement d'utilisateur (2).

4. Système selon l'une des revendications 1, 2 et 3, dans lequel au moins certaines des secondes identités d'utilisateurs sont des numéros d'annuaire.

5. Système selon l'une quelconque des revendications 1 à 4, dans lequel les première et seconde identités d'utilisateur servent de clés d'acheminement pour identifier celui, de la pluralité de registres de localisation d'utilisateurs (6a, 6b), qui contient l'enregistrement d'utilisateur pertinent, et aussi servent de clés d'accès pour identifier l'enregistrement d'utilisateur individuel (60a, 60b, 60c) dans le registre de localisation d'utilisateurs respectif (6a, 6b), et le registre de traduction (10) est agencé pour fonctionner à partir d'identités d'utilisateur du second type pour produire des clés d'acheminement du premier type et des clés d'accès du second type.

6. Système selon l'une quelconque des revendications précédentes, dans lequel plus d'une seconde identité d'utilisateur peut être associée à une première identité d'utilisateur donnée.

7. Procédé de traduction d'identités d'utilisateurs dans un système de télécommunication cellulaire comprenant les étapes d'association dès données d'utilisateur à des premières identités respectives d'utilisateur dans un registre de localisation d'utilisateurs (6a), si bien qu'on peut accéder à des données dans le registre de localisation d'utilisateurs (6a), associées à une première identité d'utilisateur, en utilisant une seconde identité correspondante d'utilisateur, **caractérisé par le fait que** les secondes identités d'utilisateur sont appliquées à un registre de traduction (10) pour fournir des premières identités correspondantes d'utilisateur à appliquer au registre de localisation d'utilisateurs (6a).

8. Procédé selon la revendication 7, dans lequel plus d'une seconde identité d'utilisateur peut être associée à une première identité donnée d'utilisateur.

9. Procédé de commande d'un système de localisation d'utilisateurs pour un système de télécommunication cellulaire comprenant une pluralité de registres de localisation d'utilisateurs (6a, 6b), chaque registre de localisation d'utilisateurs (6a, 6b) comprenant une pluralité de l'enregistrements d'utilisateur (60a, 60b, 60c), chaque enregistrement d'utilisateur comprenant des données, concernant un utilisateur associé, accessibles au moyen d'une première identité d'utilisateur et une ou plusieurs secondes identités d'utilisateur, chaque première identité d'utilisateur étant choisie dans un groupe d'identités d'utilisateurs alloué au registre de localisation d'utilisateurs respectif (6a, 6b), procédé **caractérisé par le fait que**, lorsqu'une seconde identité d'utilisateur est appliquée en entrée du système, la première identité d'utilisateur correspondant à la seconde identité d'utilisateur est identifiée et sert à choisir le registre de localisation d'utilisateurs (6a, 6b) dans lequel est stocké l'enregistrement d'utilisateur (60a, 60b, 60c) correspondant à la seconde identité d'utilisateur.

10. Procédé selon la revendication 7, 8 ou 9, dans lequel les premières identités d'utilisateur sont associées à des éléments d'équipement d'utilisateur (2).

11. Procédé selon la revendication 7, 8 ou 9, dans lequel au moins certaines des secondes identités d'utilisateurs sont associées à des éléments d'équipement d'utilisateur (2).

12. Procédé selon la revendication 7, 8, 9, 10 ou 11, dans lequel au moins certaines des secondes identités d'utilisateurs sont des numéros d'annuaire.

13. Procédé selon la revendication 7, 8, 9, 10, 11 ou 12, dans lequel les première et seconde identités d'utilisateur servent de clés d'acheminement pour identifier celui, de la pluralité de registres de localisation d'utilisateurs (6a, 6b), qui contient l'enregistrement d'utilisateur pertinent (60a, 60b, 60c), et servent aussi de clés d'accès pour identifier l'enregistrement individuel (60a, 60b, 60c) dans le registre de localisation d'utilisateurs respectif (6a, 6b), dans lequel les identités d'utilisateur du second type sont converties en clés d'acheminement du premier type et en clés d'accès du second type.

## Revendications (Revendications pour l'(les) Etat(s) contractant(s) suivant(s): FR, DE, FI, GB, SE)

1. Système de localisation d'utilisateurs pour un système de télécommunication cellulaire, comprenant une pluralité de registres de localisation d'utilisateurs (6a, 6b) pour stocker des données concernant les positions des utilisateurs dans le réseau radio cellulaire, chaque registre de localisation d'utilisateurs comprenant une pluralité d'enregistrements d'utilisateurs (60a, 60b, 60c), chaque enregistrement d'utilisateur comprenant des données concernant un utilisateur associé, chaque registre d'utilisateur étant accessible au moyen d'une première identité d'utilisateur et une ou plusieurs secondes identités correspondantes d'utilisateur, chaque première identité d'utilisateur étant choisie dans un groupe d'identités d'utilisateurs alloué au registre de localisation d'utilisateurs respectif (6a, 6b), comprenant en outre au moins un registre de traduction (10) accessible seulement par utilisation d'un groupe alloué de secondes identités d'utilisateur et agencé de façon que, en cas d'application d'une seconde identité d'utilisateur en entrée du registre de traduction (10), la première identité d'utilisateur correspondante sort du registre de traduction (10) pour être transmise au registre de localisation d'utilisateurs (6a, 6b) auquel est allouée cette première identité d'utilisateur.

2. Système selon la revendication 1, dans lequel les premières identités d'utilisateur sont associées à des éléments d'équipement d'utilisateur (2).

3. Système selon la revendication 1, dans lequel au moins certaines des secondes identités d'utilisateurs sont associées à des éléments d'équipement d'utilisateur (2).

4. Système selon l'une des revendications 1, 2 et 3, dans lequel au moins certaines des secondes identités d'utilisateurs sont des numéros d'annuaire.

5. Système selon l'une quelconque des revendications 1 à 4, dans lequel les première et seconde identités d'utilisateur servent de clés d'acheminement pour identifier celui, de la pluralité de registres de localisation d'utilisateurs (6a, 6b), qui contient l'enregistrement d'utilisateur pertinent, et aussi servent de clés d'accès pour identifier l'enregistrement d'utilisateur individuel (60a, 60b, 60c) dans le registre de localisation d'utilisateurs respectif (6a, 6b), et le registre de traduction (10) est agencé pour fonctionner à partir d'identités d'utilisateur du second type pour produire des clés d'acheminement du premier type et des clés d'accès du second type.

6. Système selon l'une quelconque des revendications précédentes, dans lequel plus d'une seconde identité d'utilisateur peut être associée à une première identité d'utilisateur donnée.

7. Procédé de traduction d'identités d'utilisateurs dans un système de télécommunication cellulaire comprenant les étapes d'association des données d'utilisateur à des premières identités respectives d'utilisateur dans un registre de localisation d'utilisateurs (6a), si bien qu'on peut accéder à des données dans le registre de localisation d'utilisateurs (6a), associées à une première identité d'utilisateur, en utilisant une seconde identité correspondante d'utilisateur, les secondes identités d'utilisateur étant appliquées à un registre de traduction (10) pour fournir des premières identités correspondantes d'utilisateur à appliquer au registre de localisation d'utilisateurs (6a), le registre de traduction (10) n'étant accessible que par utilisation d'un groupe alloué de secondes identités d'utilisateurs.

8. Procédé selon la revendication 7, dans lequel plus d'une seconde identité d'utilisateur peut être associée à une première identité donnée d'utilisateur.

9. Procédé de commande d'un système de localisation d'utilisateurs pour un système de télécommunication cellulaire comprenant une pluralité de registres de localisation d'utilisateurs (6a, 6b), chaque registre de localisation d'utilisateurs (6a, 6b) comprenant une pluralité de l'enregistrements d'utilisateur (60a, 60b, 60c), chaque enregistrement d'utilisateur comprenant des données, concernant un utilisateur associé, accessibles au moyen d'une première identité d'utilisateur et une ou plusieurs secondes identités d'utilisateur, chaque première identité d'utilisateur étant choisie dans un groupe d'identités d'utilisateurs alloué au registre de localisation d'utilisateurs respectif (6a, 6b), dans lequel, lorsqu'une seconde identité d'utilisateur est appliquée en entrée du système, la première identité d'utilisateur correspondant à la seconde identité d'utilisateur est identifiée à partir d'un registre de traduction (10) et la première identité d'utilisateur sert à choisir le registre de localisation d'utilisateurs (6a, 6b) dans lequel est stocké l'enregistrement d'utilisateur (60a, 60b, 60c) correspondant à la seconde identité d'utilisateur, le registre de traduction (10) n'étant accessible que par utilisation un groupe alloué de secondes identités d'utilisateur.

10. Procédé selon la revendication 7, 8 ou 9, dans lequel les premières identités d'utilisateur sont associées à des éléments d'équipement d'utilisateur (2).

11. Procédé selon la revendication 7, 8 ou 9, dans lequel au moins certaines des secondes identités d'utilisateurs sont associées à des éléments d'équipement d'utilisateur (2).

12. Procédé selon la revendication 7, 8, 9, 10 ou 11, dans lequel au moins certaines des secondes identités d'utilisateurs sont des numéros d'annuaire.

13. Procédé selon la revendication 7, 8, 9, 10, 11 ou 12, dans lequel les première et seconde identités d'utilisateur servent de clés d'acheminement pour identifier celui, de la pluralité de registres de localisation d'utilisateurs (6a, 6b), qui contient l'enregistrement d'utilisateur pertinent (60a, 60b, 60c), et servent aussi de clés d'accès pour identifier l'enregistrement individuel (60a, 60b, 60c) dans le registre de localisation d'utilisateurs respectif (6a, 6b), dans lequel les identités d'utilisateur du second type sont converties en clés d'acheminement du premier type et en clés d'accès du second type.
